# EUROPEAN PATENT APPLICATION

(11) **EP 2 782 043 A1**
(43) Date of publication of application: **24.09.2014**
(21) Application number: 13160506.5
(22) Date of filing: 21.03.2013
(51) Int. Cl.: G06K 1/12, G06K 7/10, G06Q 10/08, B23H 9/06, B41M 5/26

(54) **Method for providing a code on a tool**

(71) Applicant: Pard Hardware Industrial Co., Ltd., Taichung City 407 (TW)
(72) Inventor: Lin, Da-Sen, 407 Taichung City (TW)
(74) Representative: Lang, Christian

(57) **Abstract**

A method is devised for providing a code (32) on a tool (20). It includes the steps of providing a coating (30) on the tool (20) by electroplating, and providing the code (32) on the coating (30) by using a laser to make dents (36) in the coating, with patches (34) left in the coating. The dents (36) are used as black lines or dots of a bar or array code, while the patches (34) are used as blank lines or dots of the code.

## Description

### BACKGROUND OF INVENTION

### 1. FIELD OF INVENTION

The present invention relates to tools and, more particularly, to a method for providing a bar or array code on a tool.

### 2. RELATED PRIOR ART

A bar or array code such as a Quick Response code ("QR code") can be used to carry information about a tool such as a wrench. The bar or array code is often printed on a package or sticker. Before the tool is purchased and used, the tool is placed in the package or the sticker is attached to the tool. The bar or array code can be scanned and hence the information about the tool can be read. After the tool is purchased and used, the package or sticker is removed from the tool. The bar or array code is detached from the tool and hence the information about the tool is lost. However, the information about the tool might be needed.

Therefore, the present invention is intended to obviate or at least alleviate the problems encountered in prior art.

### SUMMARY OF INVENTION

It is the primary objective of the present invention to provide a method for providing a code on a tool.

To achieve the foregoing objective, the method includes the steps of providing a tool, providing a coating on the tool by electroplating, and providing a code on the coating by using laser to make dents in the coating, with patches left in the coating. The dents are used as black lines or dots of a bar or array code printed on paper while the patches are used as blank lines or dots of the bar or array code printed on the paper.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is a flow chart of a method for providing a code on a tool according to the preferred embodiment of the present invention;
FIG. 2 is a perspective view of a socket of a socket wrench marked by the method shown in FIG. 1;
FIG. 3 is a cross-sectional view of the socket shown in FIG. 2;
FIG. 4 is a side view of a wrench marked by the method shown in FIG. 1;
FIG. 5 is a perspective view of a bit of a screwdriver marked by the method shown in FIG. 1;
FIG. 6 is a perspective view of an ax marked by the method shown in FIG. 1;
FIG. 7 is a perspective view of an extension rod marked by the method shown in FIG. 1; and
FIG. 8 is a perspective view of a screwdriver marked by the method shown in FIG. 1.

### DETAILED DESCRIPTION OF PREFERRED EMBODIMENT

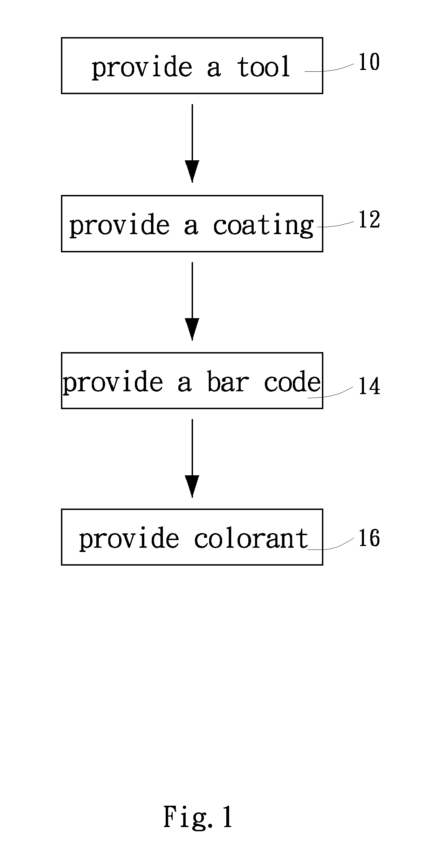

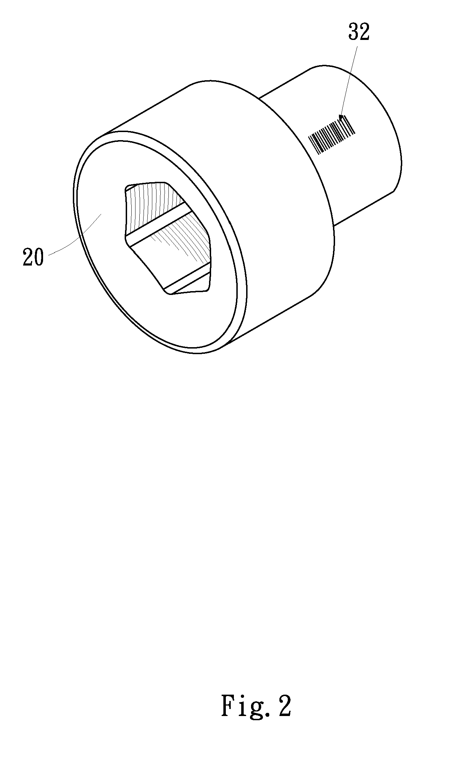

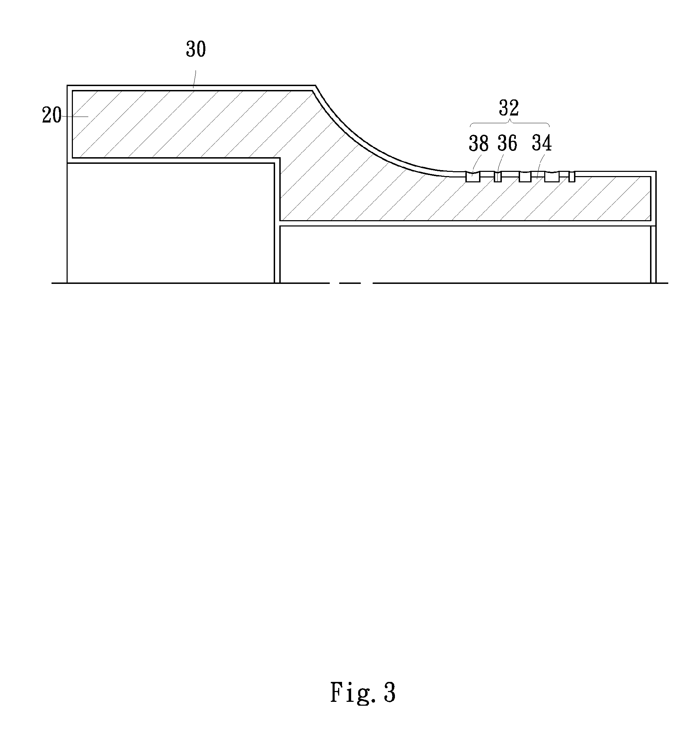

Referring to FIGS. 1 through 3, there is shown a method for providing a code on a tool according to the preferred embodiment of the present invention. At 10, there is provided a tool 20 in the form of a socket of a socket wrench for example. The tool 20 is made of a first sort of metal by punch-molding, lathing or casting for instance. The tool 20 includes two sections. The first section of the tool 20 includes a square cavity for receiving a square tongue or insert of a handle of the socket wrench. The second section of the tool 20 includes a hexagonal cavity of receiving a hexagonal nut, head of a screw or root of a tool bit.

At 12, the tool 20 is provided with a coating 30 of a second sort of metal by electroplating for example. The coating 30 is reflective of light because it is made of metal and made smooth. The coating 30 reflects almost all light cast thereon. Moreover, the coating 30 protectively keeps the tool 20 from gas and/or liquid to which rust is attributed.

At 14, a code 32 is provided in the coating 30 by laser. The code 32 is a bar or array code such as QR code. The laser removes portions of the coating 30 from an area corresponding to the code 32, thus making grooves or square dents 36 in the coating 30, leaving lines or square patches 34 of the coating 30. The code 32 consists of the lines or square patches 34 and the grooves or square dents 36. The grooves or square dents 36 are less reflective than the lines or square patches 34. The grooves or square dents 36 reflect only a little portion of light cast thereon while the lines or square patches 34 reflect almost all light cast thereon. Hence, the grooves or square dents 36 are like black square dots of a bar or array code printed on paper while the lines or square patches 34 are like blank lines or square dots of the bar or array code printed on the paper.

In an embodiment, the laser does not cut into the tool 20 so that the depth of the grooves or square dents 36 may be identical to the thickness of the coating 30. In the preferred embodiment, the laser cuts into the tool 20 so that the depth of the grooves or square dents 36 is larger than thickness of the coating 30. That is, the grooves or square dents 36 are made in the tool 20.

At 16, the grooves or square detents 36 are filled with colorant 38. The colorant 38 may be powder, paint, ink or dye. In the preferred embodiment, the colorant 38 is black and not expected to reflect any light cast thereon. The grooves or square dents 36 reflect less light with the colorant 38 than without. The colorant 38 makes the grooves or square dents 36 function like black square dots of a bar or array code printed on paper better.

In an alternative embodiment, the colorant 38 is in another color and expected to reflect light of the color. The colorant 38 filled in the grooves or square dents 36 functions like colored square dots of a bar or array code printed on paper.

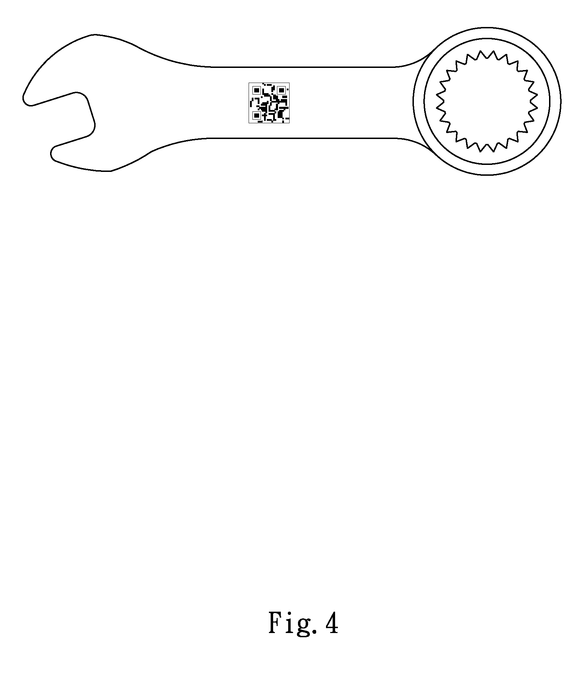

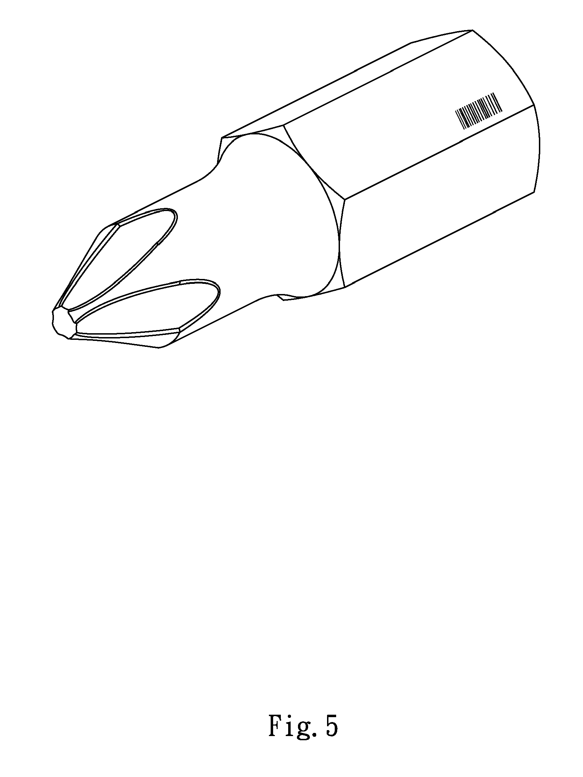

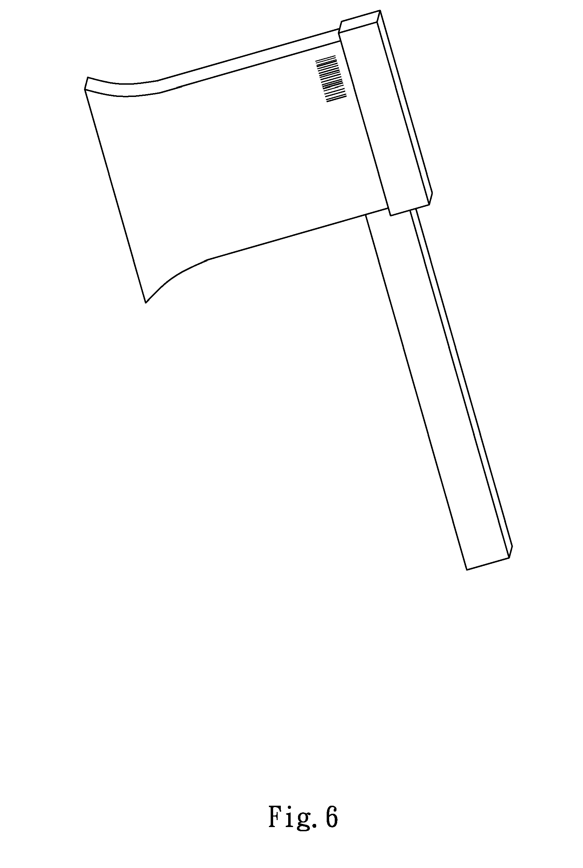

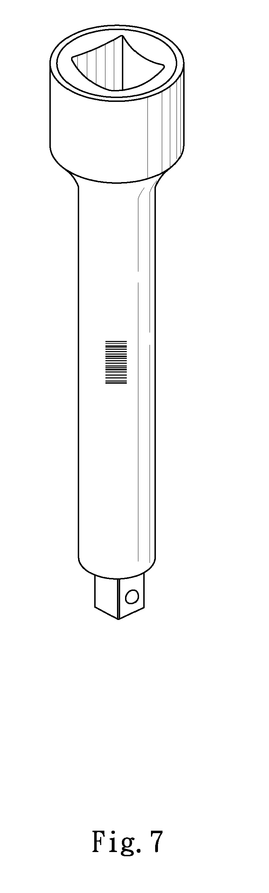

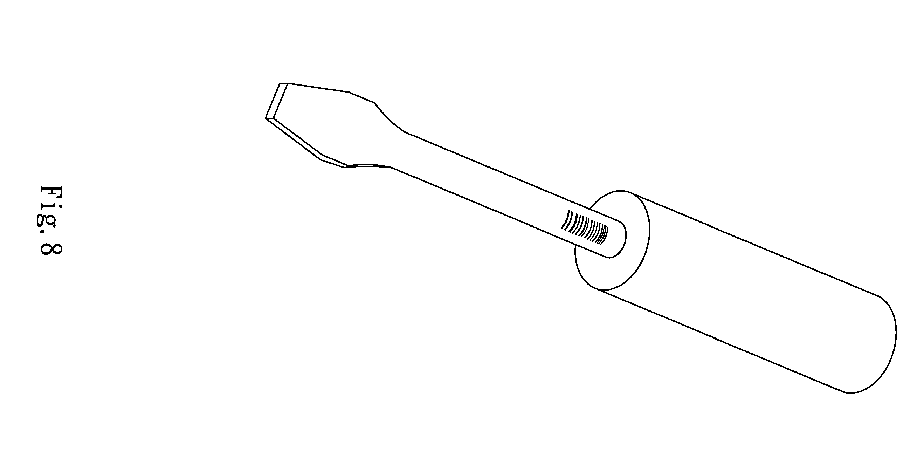

Referring to FIGS. 4 through 8, there are shown various tools that can be marked by the method of the present invention. For example, the method can be executed to mark a wrench as shown in FIG. 4, a bit of a screwdriver as shown in FIG. 5, an ax as shown in FIG. 6, an extension rod as shown in FIG. 7 or a screwdriver as shown in FIG. 8.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A method for providing a code on a tool including the steps of:
providing a tool (20); and
providing a code (32) on the tool (20) by using laser to make dents (36) in the tool (20), leaving patches (34) on the tool (20) so that the dents (36) and the patches (34) together form the code (32).

2. The method according to claim 1, further including the step of filling colorant (38) in the dents (36).

3. The method according to claim 1, further including the step of providing a coating (30) on the tool before the step of providing the code (32) on the tool (20), wherein the step of providing the code (32) on the tool (20) further includes the step of using the laser to make the dents (36) in the tool (20) through the coating (30).

4. The method according to claim 3, further including the step of filling colorant (38) in the dents (36).

5. The method according to claim 1, wherein the code (32) is a bar code.

6. The method according to claim 1, wherein the code (32) is an array code.

7. The method according to claim 1, wherein the tool (20) is selected from the group consisting of a socket, a wrench, a bit of a screwdriver, an ax, an extension rod and a screwdriver.

8. A method for providing a code on a tool including the steps of:
providing a tool (20);
providing a coating (30) on the tool (20) by electroplating; and
providing a code (32) on the coating (30) by using laser to make dents (36), leaving patches (34) in the coating (30) so that the dents (36) and the patches (34) together form the code (32).

9. The method according to claim 8, further including the step of filling colorant (38) in the dents (36).

10. The method according to claim 8, wherein the step of providing the code (32) on the coating (30) includes the step of using the laser to make the dents (36) in the tool (20) through the coating (30).

11. The method according to claim 11, further including the step of filling colorant (38) in the dents (36) in the tool (20).

12. The method according to claim 8, wherein the code (32) is a bar code.

13. The method according to claim 8, wherein the code (32) is an array code.

14. The method according to claim 8, wherein the tool (20) is selected from the group consisting of a socket, a wrench, a bit of a screwdriver, an ax, an extension rod and a screwdriver.
